# EUROPEAN PATENT APPLICATION

(11) **EP 3 798 494 A1**
(43) Date of publication of application: **31.03.2021**
(21) Application number: 19200287.1
(22) Date of filing: 27.09.2019
(51) Int. Cl.: F16L 58/10, G01J 5/00, G01N 25/20, G01N 25/48, G01N 25/72, F16L 55/26, F16L 101/30

(54) **METHODS, APPARATUS AND SYSTEMS FOR ASSESSING COATING ADHESION**

(71) Applicant: Nov Downhole Eurasia Limited, Gloucestershire GL10 3RQ (GB)
(72) Inventor: The designation of the inventor has not yet been filed
(74) Representative: Docherty, Andrew John

(57) **Abstract**

Method for assessing coating adhesion is provided, the method comprises heating coating applied to an internal pipe wall (12) ; observing cooling of the heated coating; and comparing the observed cooling with expected cooling to assess coating adhesion. Apparatus (26, 24, 22) and systems for assessing coating adhesion are also provided.

## Description

### FIELD

Some described examples relate generally to pipe assessment, and in particular to assessing coating adhesion in pipes.

### BACKGROUND

Pipes are used in a variety of industries to transport fluid and/or gas. In particular, pipes are used in the oil and gas industry to transport drilling fluid, production fluid, etc. Pipes are often internally coated to improve flow and minimize damage from corrosion. The coating may be a plastic. In particular, pipes may be comprised of a pipe wall and the plastic coating applied to the internal side of the pipe wall.

Prolonged use, and/or mechanical influences and impacts may lead damage of the integrity of the coating. Specifically, the adhesive force keeping the coating adhered to the pipe wall may no longer be sufficient to maintain proper adhesion of the coating. The net adhesive force may drop to close to zero. During subsequent use, the coating may delaminate from the pipe wall and delaminated flakes of coating may travel downstream leading to malfunctions of downstream equipment.

It is desirable to mitigate or solve one or more of the problems identified above.

This background serves only to set a scene to allow a skilled reader to better appreciate the following description. Therefore, none of the above discussion should necessarily be taken as an acknowledgement that that discussion is part of the state of the art or is common general knowledge. One or more aspects/examples of the invention may or may not address one or more of the background issues.

### SUMMARY

It should be appreciated that this Summary is provided to introduce a selection of concepts in a simplified form that are further described below in the Detailed Description. This Summary is not intended to be used to limit the scope of the claimed subject matter.

In some examples, there are provided methods, apparatus and systems for assessing coating adhesion. The provided methods, apparatus and systems are non-destructive, quick and/or cost effective. The methods, apparatus and systems may form part of an on-going maintenance program and/or a quality control/assurance.

In one example, a method for assessing coating adhesion is provided. In some examples, the method comprises heating coating applied to an internal pipe wall; observing cooling of heated coating; and comparing the observed cooling with expected cooling to assess coating adhesion.

The cooling behaviour of coating that has close to zero adhesive force is different from coating that is still sufficiently adhered to the internal pipe wall. The different cooling behaviour is found during the comparison.

In some examples, observing cooling comprises capturing images of the heated coating during cooling.

In some examples, comparing the observed cooling with expected cooling comprises parameterizing the captured images of the heated coating during cooling; and comparing the parameterized captured images to known tolerances.

In some examples, heating is performed by a heater. In some examples, the observing is performed by a camera. The method may further comprise moving or guiding the heat and/or camera through the pipe. The heat and/or camera may be moved or guided at a constant speed. As the comparison is a time-based process, guiding or moving at a constant speed ensures accurate comparison may be performed.

In some examples, the method further comprises recording the observed cooling and/or transmitting the observed cooling. The observed cooling may be recorded on a data storage medium on the camera. The stored observed cooling may later be transferred or transmitted to another device for processing upon coating assessment is complete. This ensures the heater and camera are small and compact. In another example, the observed cooling is transmitted to a data storage medium remote from the camera during coating assessment.

In some examples, the observed cooling is processed by a processor in the camera. In other examples, the processor is remote from the camera. In some examples, the observed cooling is processed in real time. In other examples, the processing is done after the heater and camera pass through the pipe.

In another example, an apparatus for assessing coating is provided. The apparatus is non-destructive, quick and/or cost effective. The apparatus may form part of an on-going maintenance program and/or a quality control/assurance.

In some examples, the apparatus comprises a heater configured to heat coating applied to an internal pipe wall; and a camera configured to capture images of the heated coating while cooling for comparison with expected cooling to assess coating adhesion.

In some examples, the apparatus further comprises a processor. The processor is configured to compare the observed cooling with expected cooling to assess coating adhesion. The processor may be configured to compare the observed cooling with known tolerances to assess coating adhesion. The processor may form part of the apparatus or be external to the apparatus. The processor may form part of the camera.

In some examples, the processor is configured to process captured images. The images are captured images of the coating after heating during cooling. The processor is further configured to parametrize the images. The processor is configured to compare the parametrized images to known tolerances. The processor is configured to indicate that the coating is not sufficiently adhered when the parametrized images fall outside the known tolerances. In some examples, the processor is configured to indicate that the coating is not sufficiently adhered when a characteristic temperature curve of the coating falls outside known tolerances. The indication may take the form of output to a user and/or an automated response.

In some examples, the pipe may be found to be not suitable for use after coating assessment due to insufficient coating adhesion that may cause flakes of coating to damage downstream devices. The pipe may be found suitable for use after coating assessment as all the coating is sufficiently adhered.

In some examples, the camera is a thermographic camera. In some examples, the camera is an infrared camera.

In some examples, the apparatus further comprises one or more sensors configured to determine a longitudinal position and/or an angular position of the apparatus. In some examples, the sensors comprise a length sensor configured to determine a longitudinal position of the apparatus within a pipe. A signal from the length sensor may be stored at the apparatus and/or transmitted to a remote processor. The signal from the length sensor may be used to determine the longitudinal position of coating assessed within the pipe.

In some examples, the sensors comprise an angular sensor configured to determine an angular position of the apparatus within a pipe. A signal from the angular sensor may be angular at the apparatus and/or transmitted to a remote processor. The signal from the length sensor may be used to determine the angular position of coating assessed within the pipe. The longitudinal positon and/or angular positions may be used to map positions of the assessed coating within the pipe. This allows a map to be created of all coating that has sufficient or insufficient adhesion to the pipe wall.

In some examples, the apparatus further comprises a motor configured to move the apparatus within the pipe. The motor may connected to a lance connected to the apparatus. The lance may flexible or rigid. In some examples, the lance is a linear chain. The linear chain is rigid upon extension and flexible when rolled such that it can be compactly stored. This saves space for storage of the apparatus.

In another example, a system for assessing coating adhesion is provided. The system is non-destructive, quick and/or cost effective. The system may form part of an on-going maintenance program and/or a quality control/assurance.

In some examples, the system comprises a heater configured to heat coating applied to an internal pipe wall; a camera configured to capture images of the heated coating while cooling; and a processor configured to process the captured images to assess coating adhesion.

In some examples, the processor is remote from the heat and camera. In some examples, the heater and camera are integrated into a single apparatus.

In some examples, the system further comprises a lance configured to guide the heater and camera through the pipe. The lance may be rigid or flexible. In some examples, the lance is a linear chain. The linear chain is rigid upon extension and flexible when rolled such that it can be compactly stored. This saves space for storage of the apparatus.

The systems may further comprise any of the previously described elements of the apparatus.

In another example, a method for assessing coating adhesion is provided. The method is non-destructive, quick and/or cost effective. The method may form part of an on-going maintenance program and/or a quality control/assurance.

In some examples, the method comprises observing thermal contrast in internal pipe coating and comparing the observed thermal contrast with expected behaviour to assess coating adhesion. Coating that is sufficiently adhered to a pipe wall cools at a different rate than coating that is insufficiently adhered to a pipe wall. Differences in the cooling behaviour are observable in the thermal contrast in internal pipe coating.

In some examples, comparing the observed thermal contrast comprises parameterizing captured images of the thermal contrast; and comparing the parameterized captured images to expected behaviour.

In some examples, expected behaviour comprises known tolerances of one or more characteristic temperature curves.

The methods may comprise one or more steps and/or elements of the previously described methods, apparatus and systems.

In another example, an apparatus for assessing coating adhesion is provided. The apparatus is non-destructive, quick and/or cost effective. The apparatus may form part of an on-going maintenance program and/or a quality control/assurance.

In some examples, the apparatus is configured to observe thermal contrast in internal pipe coating and compare the observed thermal contrast with expected behaviour to asses coating adhesion. Coating that is sufficiently adhered to a pipe wall cools at a different rate than coating that is insufficiently adhered to a pipe wall. Differences in the cooling behaviour are observable in the thermal contrast in internal pipe coating.

In some examples, the apparatus further comprises a camera to observe the thermal contrast in internal pipe coating. In some examples, the camera is a thermographic camera. In some examples, the camera is an infrared camera.

In some examples, the apparatus further comprises a processor configured to compare the observed thermal contrast with expected behaviour to asses coating adhesion. In some examples, the processor forms part of the camera. In some examples, the processor is configured to parametrize captured images of the thermal contrast; and compare the parameterized captured images to expected behaviour.

The apparatus may comprise one or more elements of the previously described apparatus.

In another example, a method for obtaining cooling tolerances for assessing coating adhesion is provided. The obtained coating cooling tolerances may be used as part of the previously described methods, apparatus and/or systems for assessing coating adhesion.

In some examples, the method comprises obtaining one or more characteristic temperature curves of coatings with known adhesion.

In some examples, the known adhesion is near zero adhesion. Near zero adhesion is defined as the coating being approximately entirely non-adhered to the surface.

In some examples, the known adhesion is near perfect adhesion. Near perfect adhesion is defined as the coating being approximately completely adhered to the surface.

In some examples, obtaining one or more characteristic temperature curves comprises heating coating perfectly applied to a surface and observing cooling of the heated coating. The coating is perfectly applied to the surface.

In some examples, obtaining one or more characteristic temperature curves comprises heating coating not applied to a surface and observing cooling of the heating coating. The coating is on the surface, but is not adhered to the surface.

The above summary is intended to be merely exemplary and non-limiting.

### BRIEF DESCRIPTION OF THE DRAWINGS

Figure 1 is a side cutaway view of a pipe;
Figure 2 is a side view of an apparatus for assessing pipe adhesion in accordance with an aspect of the description;
Figure 3 is a side view of the apparatus of Figure 2 in a cutaway pipe;
Figure 4 is a flowchart of a method in accordance with an aspect of the description;
Figure 5 is a characteristic temperature curve of assessed coating;
Figure 6 is an image of thin film applied to a test plate; and
Figure 7 is a negative of the image of Figure 6.

### DETAILED DESCRIPTION

The foregoing summary, as well as the following detailed description of certain example will be better understood when read in conjunction with the accompanying drawings. As will be appreciated, like reference characters are used to refer to like elements throughout the description and drawings. As used herein, an element or feature recited in the singular and preceded by the word "a" or "an" should be understood as not necessarily excluding a plural of the elements or features. Further, references to "one example" or "one embodiment" are not intended to be interpreted as excluding the existence of additional examples or embodiments that also incorporate the recited elements or features of that one example or one embodiment. Moreover, unless explicitly stated to the contrary, examples or embodiments "comprising", "having" or "including" an element or feature or a plurality of elements or features having a particular property might further include additional elements or features not having that particular property. Also, it will be appreciated that the terms "comprises", "has" and "includes" mean "including but not limited to" and the terms "comprising", "having" and "including" have equivalent meanings.

As used herein, the term "and/or" can include any and all combinations of one or more of the associated listed elements or features.

It will be understood that when an element or feature is referred to as being "on", "attached" to, "connected" to, "coupled" with, "contacting", etc. another element or feature, that element or feature can be directly on, attached to, connected to, coupled with or contacting the other element or feature or intervening elements may also be present. In contrast, when an element or feature is referred to as being, for example, "directly on", "directly attached" to, "directly connected" to, "directly coupled" with or "directly contacting" another element of feature, there are no intervening elements or features present.

It will be understood that spatially relative terms, such as "under", "below", "lower", "over", "above", "upper", "front", "back" and the like, may be used herein for ease of describing the relationship of an element or feature to another element or feature as depicted in the figures. The spatially relative terms can however, encompass different orientations in use or operation in addition to the orientation depicted in the figures.

Reference herein to "example" means that one or more feature, structure, element, component, characteristic and/or operational step described in connection with the example is included in at least one embodiment and or implementation of the subject matter according to the present description. Thus, the phrases "an example," "another example," and similar language throughout the present description may, but do not necessarily, refer to the same example. Further, the subject matter characterizing any one example may, but does not necessarily, include the subject matter characterizing any other example.

Reference herein to "configured" denotes an actual state of configuration that fundamentally ties the element or feature to the physical characteristics of the element or feature preceding the phrase "configured to".

Unless otherwise indicated, the terms "first," "second," etc. are used herein merely as labels, and are not intended to impose ordinal, positional, or hierarchical requirements on the items to which these terms refer. Moreover, reference to a "second" item does not require or preclude the existence of lower-numbered item (e.g., a "first" item) and/or a higher-numbered item (e.g., a "third" item).

As used herein, the terms "approximately" and "about" represent an amount close to the stated amount that still performs the desired function or achieves the desired result. For example, the terms "approximately" and "about" may refer to an amount that is within less than 10% of, within less than 5% of, within less than 1% of, within less than 0.1% of, or within less than 0.01% of the stated amount.

Some of the following examples have been described specifically in pipes for use in oil and gas production, or the like, but of course the examples may be used with pipes having other uses.

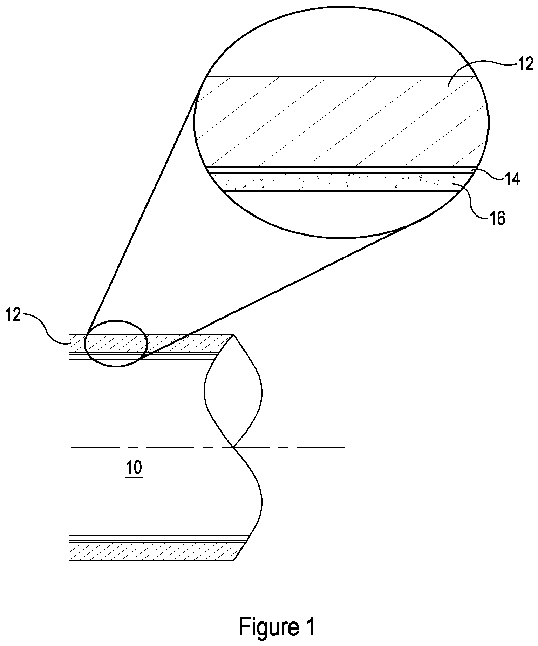

Turning now to Figure 1, a side cutaway view of a pipe 10 is shown. The pipe 10 comprises a pipe wall 12 and coating 16. In this example, the pipe 10 is a metallic pipe used in oil and gas production. The coating 16 is applied to the inner surface of the pipe wall 12. The coating 16 is configured to improve the flow of fluid through the pipe and/or minimize corrosive effects on the pipe wall 12. Fluid may include liquids, gas, solids or combinations thereof. In this example, the coating 16 is a plastic.

In this example, the pipe 10 further comprises a primer 14 applied to the pipe wall 12 prior to application of the coating 16. The primer 14 is configured to promote adhesion of the coating 16.

In this example, the pipe 10 is used in oil and gas production. The pipe 10 may be used in an onshore or offshore well structure. The pipe 10 may transport fluid to and from a subterranean formation. The pipe 10 may communicate with one or more downhole devices used in the well structure.

During use of the pipe 10, mechanical impacts, other influences and/or prolonged use may compromise the adhesiveness of the coating 16. Specifically, the adhesive force keeping the coating 16 adhered to the pipe wall 12 may decrease to zero or close to zero. The loss of adhesive force may not be visible upon visual inspection of the pipe wall 12 as the coating 16 is still in place on the pipe wall 12. Furthermore, small diameter pipes may be difficult to visually inspect. Subsequent use of a pipe 10 with decreased coating adhesive force may result in the coating 16 losing total adhesion with the pipe wall 12 and becoming deposited within the pipe as one or more flakes. In other words, the coating 16 may become delaminated and flake off the pipe wall 12. These flakes may flow downhole, and damage or lead to malfunction of downhole devices.

Traditional destructive testing renders the pipe 10 not suitable for further use and is costly and time consuming. Furthermore, existing non-destructive pipe inspection methods simply check for cracks and/or holes in the pipe wall 12 rather than for loss of coating adhesive force.

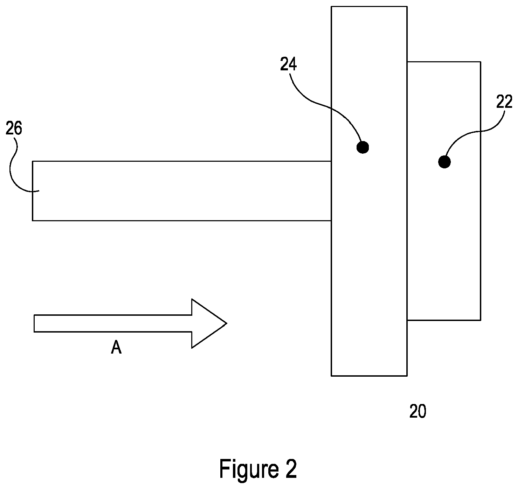

Turning now to Figure 2, an example of an apparatus 20 for assessing pipe coating adhesion in accordance with an aspect of the description is shown. The apparatus 20 comprises a heater 22 and a camera 24. In this example, the heater 22 and the camera 24 are physically connected.

The heater 22 is configured to warm or heat the coating 16 applied to the pipe wall 12. The camera 24 is configured to observe the coating 16 while the coating 16 cools. The camera 24 observes the coating 16 after it is heated by the heater 22 while the coating 16 cools. Specifically, the camera 24 is configured to capture images of the coating 16 while the coating 16 cools.

The heater 22 and camera 24 assess pipe coating adhesion through thermography. In passive thermography, elements are naturally at higher or lower temperatures than their background. In active thermography, elements are heated to produce a thermal contrast that can be observed. The thermography may be pulsed thermography in which short energy pulses are applied. The thermography may be transient thermography in which energy is applied over a longer duration than pulsed thermography. In this example, the heater 22 and camera 24 employ active thermography. The heater may employ pulsed or transient thermography.

The heater 22 heats the coating 16 to produce a thermal contrast. The thermal contrast is between the coating 16 and the surrounding environment. The camera 24 observes the thermal contrast to assess coating adhesion.

As previously stated, in this example, the camera 24 captures images of the coating 16 during cooling. The camera 24 may be a thermographic camera or an infrared (IR) camera. The camera 24 may stores the captured images. In another example, the camera 24 additionally or alternatively transmits the captured images.

In some examples, the apparatus 20 is part of a system that further comprises a processor (not shown). The processor is configured to compare the observed cooling with expected cooling to assess coating adhesion as will be described. In some examples, the processor forms part of the apparatus 20. Specifically, the processor may form part of the camera 24. In other examples, the processor is external to the camera 24. In other examples, the processor is external to the apparatus 20.

The processor is configured to process the captured images. In some examples, the processor is configured to parametrized the captured images. The processor is configured to compare the parametrized captured images to known tolerances. Parametrized images that are within known tolerances indicate that sufficient adhesive force is still present between the coating 16 and the pipe wall 12 such that the coating will not become delaminated. Parametrized images that fall outside known tolerances indicate that insufficient adhesive force is present between the coating 16 and the pipe wall 12 such that the coating may become delaminated. As previously described, coating delamination may result in one or more flakes of coating being deposited within the pipe 10 that may damage downhole devices. Parametrized images that fall within known tolerances indicate that sufficient adhesive force is present between the coating 16 and the pipe wall 12 such that coating will not become delaminated.

The apparatus 20 is configured to move within the pipe 10 to assess adhesion of all of the coating 16 where possible. In this example, the apparatus 20 further comprises a lance 26. The lance 26 is configured to guide the heater 22 and the camera 24 through the pipe 10. The lance 26 is configured to guide the heater 22 and the camera 24 at a constant speed. Guiding the heater 22 and camera 24 at a constant speed ensures the time-based cooling can be adequately captured for comparison. In this example, the lance 26 is rigid. In another example, the lance is flexible. The lance 26 may be a linear chain that is rigid upon extension and flexible when rolled such that it can be compactly stored.

A motor (not shown) is connected to the lance 26 and configured to move the apparatus 20 in direction A. The motor is configured to move the apparatus 20 at a constant speed. In this example, the motor is further configured to rotate the apparatus 20 such that adhesion of all of the coating 16 within the pipe 10 may be assessed.

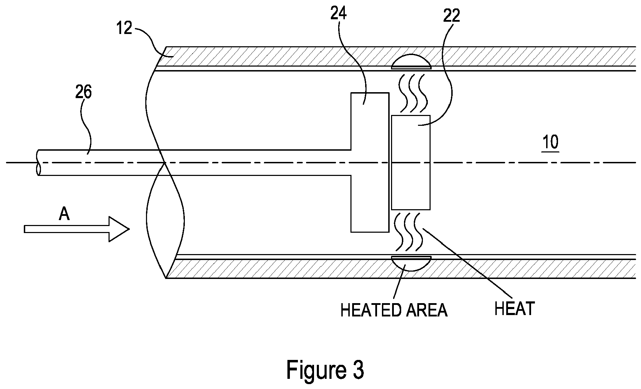

Turning to Figure 3, the apparatus 20 is shown with the pipe 10. During operation, the apparatus 20 is driven by motor and guided by lance 26 into the interior of the pipe 10. The apparatus 20 moves through the pipe at a constant speed. The heater 22 of the apparatus 20 heats the coating 16 on the pipe wall 12. The coating 16 heats up. As the heater 22 passes the heated area of the coating 16, the coating 16 begins to cool down. The camera 24 observes the cooling to assess coating adhesion. Specifically, the camera 24 captures images of the coating 16 while cooling. The camera 24 stores the captured images of the coating 16.

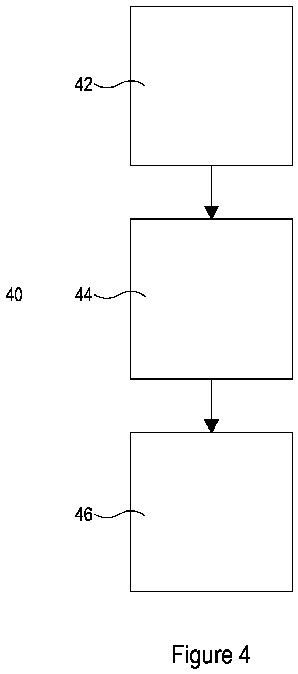

Turning now to Figure 4, a flowchart of a method 40 of assessing coating adhesion is shown. The method comprises heating 42 coating applied to an internal pipe wall; observing 44 cooling of the heating coating; and comparing 46 the observed cooling with expected cooling to assess coating adhesion. As previously described, observing 44 cooling may comprise capturing images of the heating coating during cooling. Furthermore, comparing 46 the observing cooling with expected cooling may comprise parameterizing the captured images of the heated coating during cooling; and comparing the parameterized captured images to known tolerances.

Assessment of coating adhesion may comprise rotation of the apparatus 10 during movement thereof. Furthermore, assessment of coating adhesion may involves several passes through the pipe 10 to assess all of the coating 16.

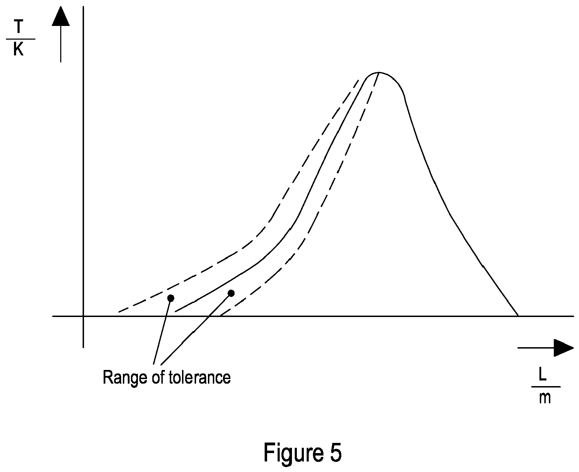

Once the camera 24 has collected all of the required images of the coating 16, the stored images are transmitted, removed or otherwise transferred to the processor. The processor parametrizes the captured images for comparison. The parametrized captured images are compared to known tolerances to assess coating adhesion. The parametrized captured images may be represented as a characteristic temperature curve of the coating 16. An exemplary characteristic curve is shown in Figure 5.

The characteristic temperature curve of Figure 5 shows the cooling behaviour of coating 16 over time. The Y-axis represents parametrized temperature while the X-axis represents parametrized time. As shown in Figure 5, a temperature curve that falls outside of the tolerances identified indicates that the coating 16 has lost adhesion to the pipe wall 12. A temperature curve that falls within the tolerances identified indicates that the coating 16 is still sufficiently adhered to the pipe wall 12.

In some examples, the tolerances are obtained by assessing coating adhesion of an experimental pipe with coating that is known to be sufficiently adhered to the pipe wall. In some examples, the tolerances are further, or alternatively, obtained by assessing coating adhesion of an experimental pipe with coating that is known to not be sufficiently adhered to the pipe wall.

As previously stated, the observations of the camera 24 may be stored, transmitted or otherwise transferred to the processor. In some examples, coating is heated and cooling is observed for the entirety of the coating to be assessed. Once this process is complete, the apparatus 20 is removed from the pipe 10. The observations are then transmitted or otherwise transferred to the processor to be processed. As previously stated, the processor may be external to the apparatus 20. The processor may form part of a personal computer system, a laptop computer system, a handheld device or any other known computing device or system.

In some examples, the heater 22 is rotatable such that the heater 22 is able to heat all of the coating 16 applied to the pipe wall 12. In some examples, the camera 24 is rotatable such that camera 24 is able to observe all of the coating 16 during cooling. In some examples, the heater 22 and camera 24 are rotatable in unison.

In some examples, the pipe 10 is rotated around the apparatus 20 such that all of the coating 16 may be heated and observed for coating adhesion assessment.

In some examples, the camera 24 comprises a reflector. Depending on the size and configuration of the pipe 10, radial space may be limited. The inclusion of a reflector allows the camera 24 to observe all of the coating 16 in these circumstances. The reflector may be aligned with the longitudinal axis of the pipe 12. In some examples, the reflector is an adapted reflector.

In some examples, the apparatus 20 comprises one or more sensors. The sensors are configured to determine a longitudinal positon and/or an annular position of the apparatus 20 within the pipe 10.

In some examples, the sensors comprise a length sensor. The length sensor is configured to determine a longitudinal position of the apparatus 20 within the pipe 10. In some examples, the length sensor is on the lance 26. A signal from the length sensor is stored, transmitted or otherwise transferred to the processor. In some examples, the processor processes the signal from the length sensor to determine the longitudinal position of assessed coating 16.

In some examples, the sensors comprise an angular sensor. The angular sensor is configured to determine an angular position of the apparatus 20 within the pipe 10. In some examples, the angular sensor is on the lance 26. A signal from the angular sensor is stored, transmitted or otherwise transferred to the processor. In some examples, the processor processes the signal from the angular sensor to determine the angular position of assessed coating 16.

The length sensor and the angular sensor allow for a mapping of the positions of assessed coating 16.

As a person skilled in the art will appreciate, the described apparatus, method and system may form part of quality control or quality assurance process after, prior to pipe 10 use, and/or during pipe 10 manufacture.

While a lance 26 has been described, a person skilled in the art will appreciate that other configurations are possible. In another example, the apparatus 20 further comprises self-driving mechanism such that the apparatus 20 may be self-driven within the pipe 10. In this example, the apparatus 20 the apparatus may be a pig-type self-driven apparatus.

In some examples, the coating 16 is cleaned and dried prior to adhesion assessment. Cleaning and drying the coating 16 prior to assessment ensures observation and image capture is accurate.

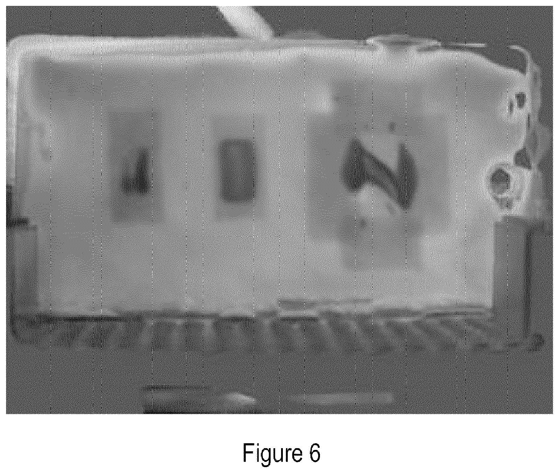

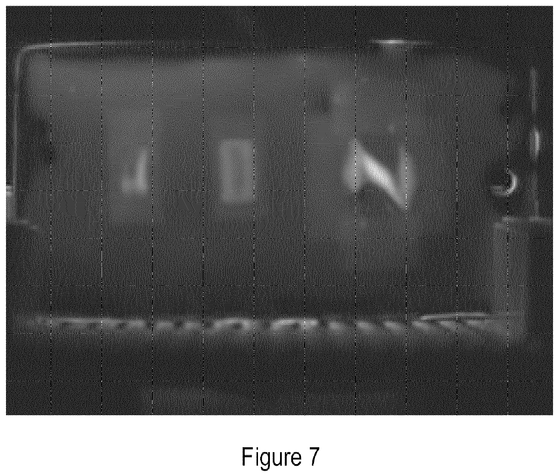

Testing of the apparatus 20 was performed to on a test plate. An image of the test plate is shown in Figure 6. A negative of the image of the test plate is shown in Figure 7.

In this example, the test plate is a steel plate. The test plate is 6 mm thick. The test plate is coated with resin. In this example, the resin is epoxy. Thin films, approximately 9 µm are present between the resin and the surface of the plate. The thin films are arranged in various shapes. As shown in Figures 6 and 7, the shapes are a reverse L-shape, a rectangle and an N-shape. The thin film is not adhered to the epoxy or the surface of the plate. In other forces, no adhesive force is present between the thin film and adjacent elements.

During the test, the test plate was heated and the image shown in Figure 6 of the test plate was captured approximately 3 seconds after heat was applied. The thin films are clearly visible in Figures 6 and 7.

The image of the test plate may be parameterized for comparison. The cooling behaviour of the thin films is compared to known tolerances. The cooling behaviour of the thin films on the test plate may be compared to cooling behaviours of films that still have sufficient adhesive force to maintain lamination to assess adhesion of the test plate. The difference in the cooling behaviours is observable.

The cooling behaviour may be represented by a characteristic temperature curve. The characteristic temperature curve is compared to known tolerances (i.e. to characteristic temperature curves of coatings that still have sufficient adhesion) to assess coating adhesion.

Each individual feature described herein is disclosed in isolation and any combination of two or more such features, to the extent that such features or combinations are capable of being carried out based on the present description as a whole in the light of the common general knowledge of a person skilled in the art, irrespective of whether such features or combinations of features solve any problems disclosed herein, and without limitation to the scope of the claims. Aspects of the description may consist of any such individual feature or combination of features. In view of the foregoing description it will be evident to a person skilled in the art that various modifications may be made within the scope of the description.

## Claims

1. A method for assessing coating adhesion, the method comprising:
heating coating applied to an internal pipe wall;
observing cooling of the heated coating; and
comparing the observed cooling with expected cooling to assess coating adhesion.

2. The method of claim 1, wherein observing cooling comprising capturing images of the heated coating during cooling, and, optionally, wherein comparing the observed cooling with expected cooling comprises:
parameterizing the captured images of the heated coating during cooling; and
comparing the parameterized captured images to known tolerances.

3. The method of claim 1 or 2, wherein the heating is performed by a heater, and, optionally, wherein the observing is performed by a camera.

4. The method of claim 3, further comprising:
moving the heater and/or the camera through the pipe, and, optionally, wherein the heater and camera are moved at a constant speed.

5. The method of any one of claims 1 to 4, further comprising at least one of:
recording the observed cooling; and
transmitting the observed cooling.

6. An apparatus for assessing coating adhesion, the apparatus comprising:
a heater configured to heat coating applied to an internal pipe wall; and
a camera configured to capture images of the heated coating while cooling for comparison with expected cooling to assess coating adhesion.

7. The apparatus of claim 6, wherein the camera is a thermographic camera or an infrared camera.

8. The apparatus of claim 6 or 7, further comprising at least one of:
one or more sensors configured to determine a longitudinal position and/or an angular position of the apparatus; and
a motor configured to move the apparatus within the pipe.

9. A system for assessing coating adhesion, the system comprising:
a heater configured to heat coating applied to an internal pipe wall;
a camera configured to capture images of the heated coating while cooling; and
a processor configured to process the captured images to assess coating adhesion.

10. The system of claim 9, further comprising:
a lance configured to guide the heater and camera through the pipe and, optionally, wherein the lance is flexible or rigid.

11. A method for assessing coating adhesion, by observing thermal contrast in internal pipe coating and comparing the observed thermal contrast with expected behaviour to assess coating adhesion.

12. The method of claim 11, wherein comparing the observed thermal contrast comprises:
parameterizing the captured images of the heated coating during cooling; and
comparing the parameterized captured images to known tolerances.

13. An apparatus for assessing coating adhesion configured to observe thermal contrast in internal pipe coating and compare the observed thermal contrast with expected behaviour to asses coating adhesion.

14. The apparatus of claim 13, further comprising a processor configured to:
parameterize the captured images of the heated coating during cooling; and
compare the parameterized captured images to known tolerances.

15. A method for obtaining coating cooling tolerances for assessing coating adhesion, comprising obtaining one or more characteristic temperature curves of coatings with known adhesion.
